# EUROPÄISCHE PATENTSCHRIFT

(11) **EP 1 640 587 B1**
(45) Veröffentlichungstag und Bekanntmachung des Hinweises auf die Patenterteilung: **09.07.2008**
(21) Anmeldenummer: 04022590.6
(22) Anmeldetag: 22.09.2004
(51) Int. Cl.: F02C 7/18, F01D 5/18

(54) **Kühlsystem für eine Gasturbine und Verfahren zum Kühlen einer Gasturbine**
Cooling system for gas turbine and method for cooling a gas turbine
Système de refroidissement d'une turbine à gaz et méthode de refroidissement d'une turbine à gaz

(43) Veröffentlichungstag der Anmeldung: 29.03.2006
(73) Patentinhaber: SIEMENS AKTIENGESELLSCHAFT, 80333 München (DE)
(72) Erfinder: Vosberg, Volker Richard, Dr., 45476 Muelheim A.D. Ruhr (DE)

(56) Entgegenhaltungen:
- EP-A- 1 418 320
- DE-A1- 2 852 057
- FR-A- 1 111 177
- US-A1- 2002 108 376
- US-A1- 2003 035 717

## Beschreibung

Die Erfindung betrifft ein Kühlsystem für eine Gasturbine, mit einem entlang eines Rotors sich axial erstreckenden Ringkanal eines Verdichters, in dem mindestens ein Kranz von drehfest befestigten Verdichterleitschaufeln und mindestens ein Kranz von an einer Rotorscheibe des Rotors befestigten Laufschaufeln vorgesehen sind, welche Schaufeln jeweils einen festlegbaren Schaufelfuß aufweisen, an dem ein Schaufelprofil und daran folgend ein Schaufelkopf ausgebildet ist, mit mindestens einer am Rotor angeordneten Kühlluftentnahmestelle zum Auskoppeln eines Kühlluftstroms in ein im Rotor angeordnetes Kühlkanalsystem und mit einer Turbineneinheit, in welcher beim Betrieb der Gasturbine von einem Heißgas thermisch beanspruchte Komponenten vom auskoppelbaren Kühlluftstrom kühlbar sind sowie mit einer Zuleitung zum Zuführen einer Flüssigkeit in den Kühlluftstrom, welches zumindest eine Öffnung zum Auslassen der Flüssigkeit aufweist.

Solch ein Kühlsystem für eine Gasturbine ist aus der Offenlegungsschrift DE 28 52 057 bekannt. Zur Kühlung der dem Verdichtermassenstrom entnommenen Kühlluft wird eine Flüssigkeit in den Kühlluftstrom eingedüst. Einer erste Variante zeigt ein die Flüssigkeit führendes Rohr, welches durch den am Ausgang des Verdichters angeordneten Diffusors geführt wird, um die in den Rotor ausgekoppelte Kühlluft durch das Erzeugen von Verdunstungskälte zu kühlen. Eine weitere Variante zeigt ein sich in Axialrichtung erstreckendes im Rotor verlaufendes Rohr mit einer Öffnung, durch die hinter der Kühlluftentnahmestelle für Kühlluft eine Flüssigkeit eindüst wird. Die dritte Variante schlägt vor, dem Diffusor Kühlluft zu entnehmen und in einer externen Kammer durch die Erzeugung von Verdunstungskälte zu kühlen, um dann die gekühlte Kühlluft der Turbineneinheit wieder zur Verfügung zu stellen.

Für die erste Variante hat es sich als nachteilig erwiesen, dass das den Diffusor durchdringende Rohr die Strömung im Diffusor behindert. Die zweite Variante hat den Nachteil, dass dem rotierenden System die Flüssigkeit übergeben werden muss, was nicht trivial und mit erhöhtem technischem Aufwand verbunden ist. Die dritte Variante ist mit dem Nachteil behaftet, dass ein wesentlicher Anteil der Kühlluftströmung aus der Gasturbine heraus und nach der externen Kühlung der Gasturbine wieder zugeführt werden muss, was auch zu aufwendigen Konstruktionen führt.

Davon ausgehend ist es Aufgabe der Erfindung, ein Kühlsystem für eine Gasturbine der eingangs genannten Art anzugeben, bei der eine einfache und kostengünstige Zuführung einer Flüssigkeit in den Kühlluftstrom ermöglicht wird, so dass gegebenenfalls auch kostengünstig bereits bestehende Gasturbinen mit einer solchen Kühlluftkühlung ausgestattet bzw. nachgerüstet werden können. Ferner ist es Aufgabe der Erfindung ein Verfahren zum Kühlen einer Gasturbine anzugeben.

Die auf das Kühlsystem einer Gasturbine gerichtete Aufgabe wird durch die Merkmale des Anspruchs 1 und die auf das Verfahren gerichtete Aufgabe wird durch die Merkmale des Anspruchs 13 gelöst.

Allen Lösungen liegt dabei ein erfinderischer Gedanke zu Grunde: die Flüssigkeit kann einfach und kostengünstig im Bereich der Kühlluftentnahmestelle in den Kühlluftstrom eingedüst werden, wenn die Zuleitung sich mit einem Teilkanal durch zumindest eine der Verdichterleitschaufeln des Kranzes erstreckt, und die Öffnung zum Auslassen der Flüssigkeit im Bereich der Kühlluftentnahmestelle verbunden ist.

Die aus dem bekannten Stand der Technik sich ergebenden Nachteile können so vollständig vermieden werden.

Auch wenn eine Kühlluftkühlung für bereits bestehende Gasturbinen nachgerüstet werden soll, kann dies sehr einfach realisiert werden, indem mindestens eine Verdichterleitschaufel eines Kranzes, welche im Bereich der Kühlluftentnahmestelle kopfseitig endet, jeweils durch eine Verdichterleitschaufel ausgetauscht wird, welche einen Teilkanal der Zuleitung zum Durchführen einer Flüssigkeit aufweist, welcher Teilkanal schaufelfußseitig mit der Zuleitung zum Zuführen der Flüssigkeit verbindbar und schaufelkopfseitig zumindest eine Öffnung zum Auslassen der Flüssigkeit aufweist. Zur Fertigstellung der Kühlluftkühlung sind die neu montierten Verdichterleitschaufeln lediglich mit der Zuleitung zum Zuführen der Flüssigkeit zu den Verdichterleitschaufeln zu verbinden bzw. auszustatten, so dass eine bestehende Gasturbine einfach und kostengünstig mit einer Kühlluftkühlung nachgerüstet werden kann.

Vorteilhafte Ausgestaltungen sind in den Unteransprüchen angegeben.

In einer vorteilhaften Ausgestaltung wird vorgeschlagen, dass der Rotor mindestes zwei unmittelbar benachbarte Rotorscheiben aufweist, zwischen denen ein radial nach außen offener Scheibenzwischenraum vorgesehen ist, in den die Schaufelköpfe der Verdichterleitschaufeln des Kranzes hineinragen. Ein an dieser Stelle geformter Scheibenzwischenraum ermöglicht besonders einfach das Zuführen der Flüssigkeit in den Bereich der Kühlluftentnahmestelle.

Bevorzugt weisen mehrere, über den Umfang symmetrisch verteilte Verdichterleitschaufeln des Kranzes jeweils einen Teilkanal der Zuleitung und Öffnungen zum Auslassen der Flüssigkeit auf. Somit erfolgt eine Vergleichmäßigung der Kühlluftkühlung, da über den Umfang des Rotors verteilte Kühlluftentnahmestellen gleichmäßig gekühlte Kühlluft auskoppeln können.

Neben freistehenden Verdichterleitschaufeln können auch in einer weiteren vorteilhaften Ausgestaltung beidseitig befestigte Verdichterleitschaufeln erfindungsgemäß ausgestaltet werden. Hierzu sind die dem Rotor zugewandten Schaufelköpfe der Verdichterleitschaufeln des Kranzes an einem Befestigungsring festgelegt, welcher für die Flüssigkeit zumindest einen Durchgangskanal mit Öffnungen zum Auslassen der Flüssigkeit in den Scheibenzwischenraum aufweist. Es können somit sowohl kopfseitig freistehende oder festgelegte Verdichterleitschaufeln erfindungsgemäß ausgestaltet sein.

Als vorteilhaft erweist sich die Maßnahme, bei der der Befestigungsring eine Anzahl von über den Umfang symmetrisch verteilten Durchlässen und Öffnungen zum Auslassen der Flüssigkeit aufweist. Auch hier kann eine gleichmäßige, homogene Kühlung der Kühlluft im Scheibenzwischenraum erfolgen.

Strömungstechnisch geringe Verluste während der Auskopplung der Kühlluft zeigt die Ausgestaltung, bei der jede in den Scheibenzwischenraum mündende Öffnung einer Kühlluftentnahmestelle gegenüberliegt.

Eine besonders schnelle Verdunstung der eingedüsten Flüssigkeit, welche die Effizienz der Kühlung steigert, kann erreicht werden, wenn die in den Scheibenzwischenraum mündenden Öffnungen düsenförmig ausgebildet sind. Hierdurch wird die eingedüste Flüssigkeit in feine Tröpfchen zerstäubt, die wesentlich einfacherer und schneller verdampfen und somit der Umgebung, d. h. der auszukoppelnden Kühlluft Wärme entziehen.

Als besonders vorteilhaft hat sich die Ausgestaltung herausgestellt, bei der jede Öffnung derart geformt ist, dass der einströmenden Flüssigkeit eine in Umfangsrichtung des Rotors gerichtete Strömungskomponente aufgeprägt wird, welche mit einer Drehrichtungskomponente des Rotors identisch ist. Hierdurch wird einerseits die Flüssigkeit als auch die im Scheibenzwischenraum vorhandene Kühlluft in einen in Umfangsrichtung gerichteten Drall versetzt, welcher der Drehrichtung des Rotors entspricht, so dass das Einströmen der gekühlten Kühlluft in die Kühlluftentnahmestelle verlustarmer und effizienter erfolgen kann.

Bevorzugt umfasst die Zuleitung zum Zuführen der Flüssigkeit ein Einstellorgan, mit der die zugeführte Menge der Flüssigkeit pro Zeiteinheit einstellbar ist. Hierdurch kann für jeden beliebigen Betriebszustand der Gasturbine eine vorbestimmte Menge an Flüssigkeit eingestellt werden, was zur Folge hat, dass die Kühlluft den Betriebsbedingungen der Gasturbine entsprechend bedarfsgerecht gekühlt werden kann. Optional ist die zugeführte Menge der Flüssigkeit von einem auf das Einstellorgan einwirkenden Regler anpassbar.

In einer bevorzugten Ausgestaltung wird vorgeschlagen, dass der Teilkanal der Zuleitung in der Verdichterschaufel ein Hohlraum, ein Rohr oder eine Bohrung ist. Hierdurch lässt sich einfach und kostengünstig die Flüssigkeit von außen durch den Strömungskanal der Gasturbine bzw. des Verdichters führen, ohne Strömungsverluste bei dem im Strömungskanal strömenden Medium hervorzurufen.

Dadurch, dass die Flüssigkeit vor der Kühlluftentnahmestelle in den Kühlluftstrom eingebracht wird, kann die Kühlluftströmung mit einem Drall versehen werden, welcher den Übergang der Kühlluftströmung von dem stehenden System in den Rotor verlustärmer gestaltet.

Zweckmäßigerweise ist die Flüssigkeit Wasser, insbesondere destilliertes Wasser.

Das erfindungsgemäße Kühlverfahren kann dabei sowohl während des Betriebes der Gasturbine als auch im Anschluss an den Betrieb während einer Abkühlphase zur schnelleren Kühlung des Rotors durchgeführt werden. Somit ergeben sich gleich zweierlei Vorteile: während des Betriebes ist die Kühlung der Kühlluft an den momentanen Betriebs- bzw. Lastzustand der Gasturbine anpassbar und während einer im Anschluss an den Betrieb der Gasturbine durchgeführten Abkühlphase kann die im Inneren des Rotors gespeicherte Wärme schneller nach außen abgeführt werden. Dies begünstigt einerseits das Startverhalten einer nicht vollständig ausgekühlten Gasturbine (Warmstartverhalten) und vermindert andererseits die Standzeiten der Gasturbine, indem Service- und/oder Wartungsarbeiten durch die schneller vollständig abgekühlte Gasturbine frühzeitiger angefangen werden können.

Die Erfindung wird anhand einer Zeichnung erläutert. Es zeigt:
- FIG 1: eine Gasturbine mit einem Verdichter in einem Längsteilschnitt,
- FIG 2: einen Ausschnitt aus dem Verdichter in einem Längsschnitt und
- FIG 3: eine erfindungsgemäße Verdichterleitschaufel mit einem Befestigungsring in dem Verdichter im Schnitt.

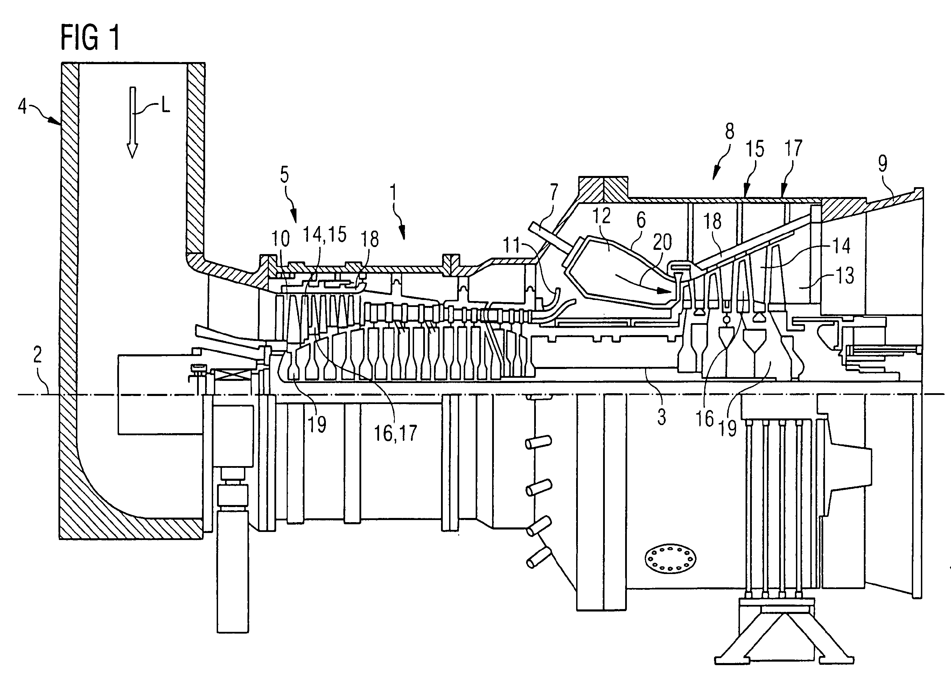

Die Figur 1 zeigt eine Gasturbine 1 in einem Längsteilschnitt. Sie weist im Inneren einen um eine Drehachse 2 drehgelagerten Rotor 3 auf, der auch als Turbinenläufer bezeichnet wird. Entlang des Rotors 3 folgen ein Ansauggehäuse 4, ein Verdichter 5, eine torusartige Ringbrennkammer 6 mit mehreren ringförmig angeordneten Brennern 7, eine Turbineneinheit 8 und ein Abgasgehäuse 9 aufeinander.

Im Verdichter 5 ist ein ringförmiger Verdichterkanal 10 vorgesehen, der sich in Richtung der Ringbrennkammer 6 im Querschnitt verjüngt. Am brennkammerseitigen Ausgang des Verdichters 5 ist ein Diffusor 11 angeordnet, der mit der Ringbrennkammer 6 in Strömungsverbindung steht. Die Ringbrennkammer 6 bildet einen Verbrennungsraum 12 für ein Gemisch aus einem Brennmittel und verdichteter Luft. Ein Heißgaskanal 13 ist mit dem Verbrennungsraum 12 in Strömungsverbindung, wobei dem Heißgaskanal 13 das Abgasgehäuse 9 nachgeordnet ist.

Im Verdichterkanal 10 und im Heißgaskanal 13 sind jeweils alternierend Schaufelkränze angeordnet. Es folgt einem aus Leitschaufeln 14 gebildetem Leitschaufelkranz 15 jeweils ein aus Laufschaufeln 16 gebildeter Laufschaufelkranz 17. Die feststehenden Leitschaufeln 14 sind dabei mit einem Gehäuse 18 verbunden, wohingegen die Laufschaufeln 16 am Rotor 3 jeweils mittels einer Rotorscheibe 19 verbunden sind.

Der Rotor 3 des Verdichters 5 setzt sich aus mehreren Rotorscheiben 19 zusammen, die in Axialrichtung gestapelt angeordnet von einem zentralen Zuganker verspannt sind.

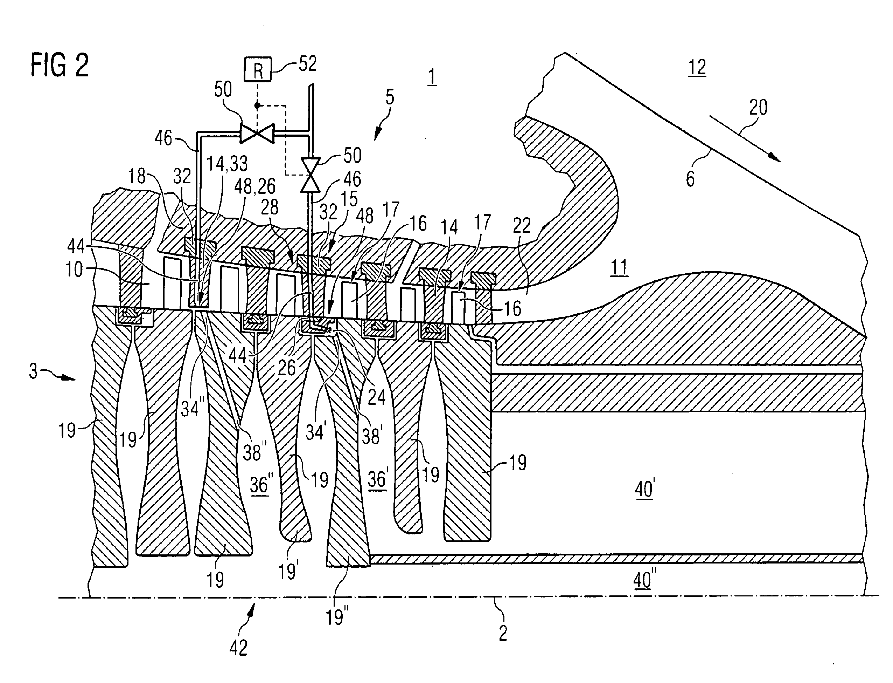

Figur 2 zeigt einen Ausschnitt eines Verdichters 5 einer Gasturbine 1. Im Verdichterkanal 10 wird durch die kaskadierende Anordnung von Leitschaufelkränzen 15 und Laufschaufelkränzen 17 angesaugte Umgebungsluft verdichtet, welche am Ausgang 22 des Verdichters 5, d. h. am Eintritt eines nachgeordneten Diffusors 11 bereitgestellt wird. Zwischen zwei unmittelbar benachbarten Rotorscheiben 19, beispielsweise zwischen den mit 19', 19" bezeichneten Rotorscheiben, ist ein Scheibenzwischenraum 24 geformt, in denen die Schaufelköpfe 26 von Verdichterleitschaufeln 28 hineinragen. Die Verdichterleitschaufeln 28 weisen ein Schaufelprofil 30 auf, an welches sich ein im Gehäuse 18 festgelegter Schaufelfuß 32 anschließt.

Zumindest eine der beiden Rotorscheiben 19', 19" weist eine Kühlluftentnahmestelle 34' auf, welche an den Scheibenzwischenraum 24 angrenzt. Ferner weist eine weitere Rotorscheibe 19"' eine weitere Kühlluftentnahmestelle 34" auf, welche einer kopfseitig freistehenden Verdichterleitschaufel 33 gegenüberliegt.

An jeder Kühlluftentnahmestelle 34' schließt ein sich annähernd radial durch die Rotorscheibe 19'' erstreckenden Kanal 38'an, der in einen im Rotor 3 angeordneten Hohlraum 36'mündet. Der Hohlraum 36' steht über einen sich in Axialrichtung erstreckenden Ringkanal 40' mit den in Figur 2 nicht dargestellten, mit Kühlluft beaufschlagbaren Laufschaufeln 16 einer Turbinenstufen der Turbineneinheit 8 in Strömungsverbindung. Ebenso formt die Kühlluftentnahmestelle 34" mit einem Kanal 38", einem Hohlraum 36" und einem Ringkanal 40' einen Abschnitt des Strömungspfades für die Kühlluft.

Für das Kühlsystem 42 weisen die Verdichterleitschaufeln 28, 33, die einer Kühlluftentnahmestelle 34 gegenüberliegen, jeweils einen Teilkanal 44 einer Zuleitung 46 zum Durchführen einer Flüssigkeit 45 auf, welcher Teilkanal 44 schaufelfußseitig mit der Zuleitung 46 zum Zuführen der Flüssigkeit 45 und schaufelkopfseitig mit zumindest einer Öffnung 48 zum Auslassen der Flüssigkeit 45 im Bereich der Kühlluftentnahmestelle 34 versehen ist. Schaufelfußseitig ist die Zuleitung 46, beispielsweise ein Rohr, mit einem Absperr- bzw. Einstellorgan, beispielsweise ein Ventil 50, verbunden, welches Organ von einem Regler 52 angesteuert werden kann, um die pro Zeiteinheit durchströmende Menge an Flüssigkeit 45 entsprechend den Betriebsbedingungen der Gasturbine 1 einzustellen oder um eine Turbinenschaufeltemperatur zu regeln.

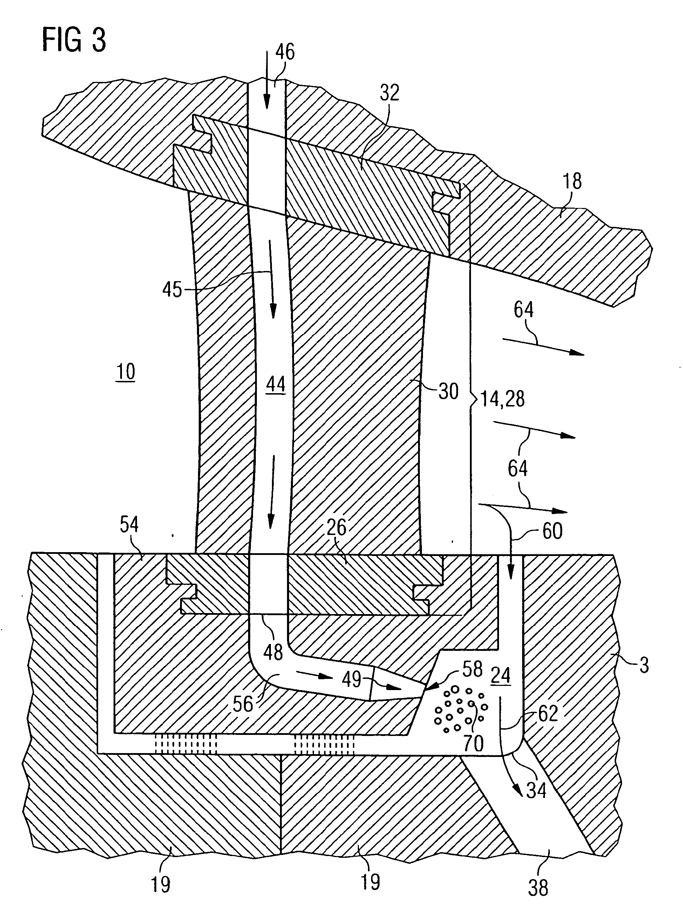

In Figur 3 ist die erfindungsgemäße Verdichterleitschaufel 28 im Detail gezeigt. Die Verdichterleitschaufel 28 weist den im Gehäuse 18 festgelegten Schaufelfuß 32 auf, an dem sich das Schaufelprofil 30 und daran der Schaufelkopf 26 anschließt. Die Schaufelköpfe 26 eines Leitschaufelkranzes 15 werden dabei von einem Befestigungsring 54 rotorseitig gehalten.

Der Befestigungsring 54 weist zumindest an den Stellen, an denen die Verdichterleitschaufeln 28 Teilkanäle 44 zum Durchführen einer Flüssigkeit 45 aufweisen, einen Durchgangskanal 56 auf, dessen erstes Ende der an der Verdichterleitschaufel 28 angeformten Öffnung 48 gegenüberliegt und dessen zweites Ende in Form einer Düse 58 ausgebildet ist. Das zweite Ende des Durchgangskanals 56 liegt als Öffnung 59 der Kühlluftentnahmestelle 34 gegenüber.

Der Teilkanal 44 kann beispielsweise eine Bohrung sein, welche durch eine massiv ausgeführte Verdichterleitschaufel 28 hindurch verläuft. Alternativ könnte der Teilkanal 44 ein Hohlraum, gegebenenfalls auch ein herstellungsbedingter Hohlraum der Verdichterleitschaufel 28 oder ein Rohr sein, welches in diesem Hohlraum verläuft.

Üblicherweise weist jede Rotorscheibe 19, eine Anzahl von Kühlluftentnahmestellen 34 auf, die symmetrisch über ihren Umfang verteilt sind. Bevorzugtermaßen weist der Leitschaufelkranz 15, welcher der Kühlluftentnahmestellen 34 zugeordnet ist, eine zu den Kühlluftentnahmestellen 34 identische Anzahl von Öffnungen 48 auf, die korrespondierend zu den Kühlluftentnahmestellen 34 über den Umfang verteilt sind.

Während des Betriebes des Verdichters 5 wird im Verdichterkanal 10 durchströmende Luft verdichtet. Eine Teilströmung dieser verdichteten Luft wird über den Scheibenzwischenraum 24 gemäß den Pfeilen 60, 62 aus der Hauptströmung 64 ausgekoppelt. In den Scheibenzwischenraum 24, im Bereich der Kühlluftentnahmestelle 34, kann zur Kühlung der später als Kühlluft eingesetzten Teilströmung 60, 62 die über die Zuleitung 46, der Teilkanal 44, die Öffnung 48, den Durchgangskanal 56 und die Düse 58 geführte Flüssigkeit 45, vorzugsweise destilliertes Wasser (Deionat), eingedüst werden. Aufgrund der Düse 58 wird die Flüssigkeit 45 in kleinste Tröpfchen 70 zerstäubt, wodurch diese besonders einfach verdampfen und der ausgekoppelten Teilströmung 60, 62 Wärme entziehen.

Durch die Rotation des Rotors 3 drehen sich die Kühlluftentnahmestellen 34 unter den Öffnungen 48, 49 hinweg bzw. laufen an diesen vorbei, jedoch bei stehendem Rotor ist es möglich, dass sich die Kühlluftentnahmestellen 34 und die Öffnungen 49 bei kopfseitig festgelegten Verdichterleitschaufeln 28 und die Öffnungen 48 bei kopfseitig freistehenden Verdichterleitschaufeln 33 (Fig. 2) gegenüberliegen.

Der Durchgangskanal 56 und/oder die Düse 58 ist bzw. sind derart geformt, dass die eingedüste Flüssigkeit 45 eine in Umfangsrichtung des Rotors 3 gerichtete Strömungskomponente aufweist, welche der Drehrichtungskomponente des Rotors 3 entspricht. Dadurch wird der Teilstrom 60, 62 während des Eindüsvorganges in die Richtung beschleunigt, in die der Rotor 3 dreht, so dass die gekühlte Teilströmung 60, 62 als Kühlluftstrom leichter in die Kühlluftentnahmestelle 34 einströmen kann.

In einer alternativen Ausgestaltung könnte anstelle der kopfseitig im Befestigungsring 54 festgelegten Verdichterleitschaufeln 28 auch freistehende Verdichterleitschaufeln 33 mit der Zuleitung 46 zum Zuführen einer Flüssigkeit 45 ausgestattet sein, um in den vom Rotor 3 auskoppelbaren Kühlluftstrom eine Flüssigkeit 45 zur Kühlung der Kühlluft einzudüsen.

## Patentansprüche

1. Kühlsystem (42) für eine Gasturbine (1),
mit einem entlang eines Rotors (3) sich axial erstreckenden Ringkanal eines Verdichters (5), in dem mindestens ein Kranz (15) von drehfest befestigten Verdichterleitschaufeln (14, 28, 33) und mindestens ein Kranz (17) von an einer Rotorscheibe (19) des Rotors (3) befestigten Laufschaufeln (16) vorgesehen sind, welche Verdichterleitschaufeln (14, 28, 33) jeweils einen festlegbaren Schaufelfuß (32) aufweisen, an dem ein Schaufelprofil (30) und daran folgend ein Schaufelkopf (26) ausgebildet ist,
mit mindestens einer am Rotor (3) angeordneten Kühlluftentnahmestelle (34) zum Auskoppeln eines Kühlluftstroms in ein im Rotor (3) angeordnetes Kühlkanalsystem und
mit einer Turbineneinheit (8), in welcher beim Betrieb der Gasturbine (1) von einem Heißgas (20) thermisch beanspruchte Komponenten vom auskoppelbaren Kühlluftstrom kühlbar sind sowie mit einer Zuleitung (46) zum Zuführen einer Flüssigkeit (45) in den Kühlluftstrom, welches zumindest eine Öffnung (48, 49) zum Auslassen der Flüssigkeit aufweist,
**dadurch gekennzeichnet,**
**dass** sich die Zuleitung (46) mit einem Teilkanal (44) durch zumindest eine der Verdichterleitschaufeln (28, 33) des Kranzes (15) erstreckt, und die Öffnung (48, 49) zum Auslassen der Flüssigkeit (45) im Bereich vor der Kühlluftentnahmestelle (34) angeordnet ist.

2. Kühlsystem (42) nach Anspruch 1,
**dadurch gekennzeichnet, dass**
der Rotor (3) mindestens zwei unmittelbar benachbarte Rotorscheiben (19', 19'') aufweist, zwischen denen ein radial nach außen offener Scheibenzwischenraum (24) vorgesehener ist, in den die Schaufelköpfe (26) der Verdichterleitschaufeln (28) des Kranzes (15) hineinragen.

3. Kühlsystem (42) nach Anspruch 1 oder 2,
**dadurch gekennzeichnet,**
**dass** mehrere, über den Umfang symmetrische verteilte Verdichterleitschaufeln (28, 33) des Kranzes einen Teilkanal (44) der Zuleitung (46) und Öffnungen (48) zum Auslassen der Flüssigkeit (45) aufweisen.

4. Kühlsystem (42) nach einem der Ansprüche 1 bis 3,
**dadurch gekennzeichnet,**
**dass** die Schaufelköpfe (26) der Verdichterleitschaufeln (28) des Kranzes (15) an einem Befestigungsring (54) festgelegt sind, welcher für die Flüssigkeit (45) zumindest einem Durchgangskanal (56) mit der Öffnung (49) zum Auslassen der Flüssigkeit (45) in den Scheibenzwischenraum (24) aufweist.

5. Kühlsystem (42) nach Anspruch 4,
**dadurch gekennzeichnet,**
**dass** der Befestigungsring (54) eine Anzahl von über den Umfang symmetrisch verteilten Durchlässe (56) und Öffnungen (49) zum Auslassen der Flüssigkeit (45) aufweist.

6. Kühlsystem (42) nach einem oder mehreren der Ansprüche 2 bis 5,
**dadurch gekennzeichnet,**
**dass** jede in den Scheibenzwischenraum (24) mündende Öffnung (48) der Kühlluftentnahmestelle (34) gegenüberliegt.

7. Kühlsystem (42) nach einem oder mehreren der Ansprüche 2 bis 6,
**dadurch gekennzeichnet,**
**dass** jede in den Scheibenzwischenraum (24) mündende Öffnung (48, 49) düsenförmig ausgebildet ist.

8. Kühlsystem (42) nach einem oder mehreren der Ansprüche 1 bis 7,
**dadurch gekennzeichnet,**
**dass** die Öffnung (48, 49) derart geformt ist, dass die Flüssigkeit (45) eine in Umfangrichtung des Rotors (3) gerichtete Strömungskomponente aufweist, welche mit einer Drehrichtungskomponente des Rotors (3) identisch ist.

9. Kühlsystem (42) nach einem oder mehreren der Ansprüche 1 bis 8,
**dadurch gekennzeichnet,**
**dass** die Zuleitung (46) zum Zuführen der Flüssigkeit (45) ein Einstellorgan umfasst, mit der die zugeführte Menge der Flüssigkeit (45) pro Zeiteinheit einstellbar ist.

10. Kühlsystem (42) nach Anspruch 9,
**dadurch gekennzeichnet,**
**dass** die zugeführte Menge der Flüssigkeit (45) von einem auf das Einstellorgan einwirkenden Regler (52) anpassbar ist.

11. Kühlsystem (42) nach Anspruch 1,
**dadurch gekennzeichnet,**
**dass** die Verdichterleitschaufel (28, 33) kopfseitig freistehend ist.

12. Kühlsystem (42) nach einem der vorangehenden Ansprüche,
**dadurch gekennzeichnet,**
**dass** in der Verdichterschaufel (28, 33) der Teilkanal (44) zum Durchführen der Flüssigkeit (45) ein Hohlraum, ein Rohr oder eine Bohrung ist.

13. Verfahren zum Kühlen einer Gasturbine (1),
bei der ein an einer Kühlluftentnahmestelle (34) eines Verdichters (5) ausgekoppelter Kühlluftstrom in ein im Rotor (3) angeordnetes Kühlluftkanalsystem eingekoppelt wird,
wobei dem Kühlluftstrom eine Flüssigkeit (45) zugeführt wird,
**dadurch gekennzeichnet,**
**dass** die Flüssigkeit (45) vor der Kühlluftentnahmestelle (34) in den Kühlluftstrom eingebracht wird.

14. Verfahren nach Anspruch 13,
**dadurch gekennzeichnet,**
**dass** die Flüssigkeit (45) mit einer in Umfangsrichtung des Rotors (3) gerichteten Strömungskomponente ausgeblasen wird.

15. Verfahren nach Anspruch 14 oder 15,
**dadurch gekennzeichnet,**
**dass** die Flüssigkeit (45) Wasser, insbesondere destilliertes Wasser, ist.

16. Verfahren nach Anspruch 13, 14 oder 15,
**dadurch gekennzeichnet, dass**
das Verfahren während des Betriebes der Gasturbine (1) durchgeführt wird.

17. Verfahren nach Anspruch 13, 13 oder 15,
**dadurch gekennzeichnet,**
**dass** zur schnelleren Kühlung des Rotors (3) das Verfahren im Anschluss an den Betrieb während einer Abkühlphase durchgeführt wird.

## Claims

1. Cooling system (42) for a gas turbine (1),
with an annular duct of a compressor (5), extending axially along a rotor (3), in which at least one ring (15) of compressor guide blades (14, 28, 33) fastened fixedly in terms of rotation and at least one ring (17) of moving blades (16) fastened to a rotor disk (19) of the rotor (3) are provided, which compressor guide blades (14, 28, 33) have in each case a securable blade root (32) on which a blade profile (30) and, following the latter, a blade head (26) are formed, with at least one cooling-air extraction point (34), arranged on the rotor (3), for diverting a cooling-air stream into a cooling-duct system arranged in the rotor (3), and with a turbine unit (8), in which, when the gas turbine (1) is in operation, components subjected to thermal stress by a hot gas (20) can be cooled by the divertible cooling-air stream, and also with a feed line (46) for feeding a liquid (45) into the cooling-air stream, said feed line having at least one orifice (48, 49) for the outlet of the liquid,
**characterized in that** the feed line (46) extends with a subduct (44) through at least one of the compressor guide blades (28, 33) of the ring (15), and the orifice (48, 49) for the outlet of the liquid (45) is arranged in the region upward of the cooling-air extraction point (34).

2. Cooling system (42) according to claim 1,
**characterized in that** the rotor (3) has at least two directly adjacent rotor disks (19', 19''), between which is provided a radially outwardly open disk interspace (24), into which the blade heads (26) of the compressor guide blades (28) of the ring (15) project.

3. Cooling system (42) according to claim 1 or 2,
**characterized in that** a plurality of compressor guide blades (28, 33) of the ring which are distributed symmetrically over the circumference have a subduct (44) of the feed line (46) and orifices (48) for the outlet of the liquid (45).

4. Cooling system (42) according to one of claims 1 to 3,
**characterized in that** the blade heads (26) of the compressor guide blades (28) of the ring (15) are secured to a fastening ring (54) which has for the liquid (45) at least one passage duct (56) with the orifice (49) for the outlet of the liquid (45) into the disk interspace (24).

5. Cooling system (42) according to claim 4,
**characterized in that** the fastening ring (54) has a number of passages (56) and orifices (49) for the outlet of the liquid (45) which are distributed symmetrically over the circumference.

6. Cooling system (42) according to one or more of claims 2 to 5,
**characterized in that** each orifice (48) issuing into the disk interspace (24) is located opposite the cooling-air extraction point (34).

7. Cooling system (42) according to one or more of claims 2 to 6,
**characterized in that** each orifice (48, 49) issuing into the disk interspace (24) is of nozzle-shaped design.

8. Cooling system (42) according to one or more of claims 1 to 7,
**characterized in that** the orifice (48, 49) is shaped in such a way that the liquid (45) has a flow component which is directed in the circumferential direction of the rotor (3) and which is identical to a direction-of-rotation component of the rotor (3).

9. Cooling system (42) according to one or more of claims 1 to 8,
**characterized in that** the feed line (46) for feeding the liquid (45) comprises a setting member, by means of which the fed quantity of liquid (45) per unit time can be set.

10. Cooling system (42) according to claim 9,
**characterized in that** the fed quantity of liquid (45) can be adapted by a controller (52) acting on the setting member.

11. Cooling system (42) according to claim 1,
**characterized in that** the compressor guide blade (28, 33) projects on the head side.

12. Cooling system (42) according to one of the preceding claims,
**characterized in that** in the compressor blade (28, 33) the subduct (44) for leading through the liquid (45) is a cavity, a tube or a bore.

13. Method for cooling a gas turbine (1),
in which a cooling-air stream diverted at a cooling-air extraction point (34) of a compressor (5) is fed into a cooling-air duct system arranged in the rotor (3), a liquid (45) being fed to the cooling air stream,
**characterized in that**, the liquid (45) is introduced upline of the cooling-air extraction point (34) into the cooling-air stream.

14. Method according to claim 13,
**characterized in that** the liquid (45) is blown out with a flow component which is directed in the circumferential direction of the rotor (3).

15. Method according to claim 14 or 15,
**characterized in that** the liquid (45) is water, in particular distilled water.

16. Method according to claim 13, 14 or 15,
**characterized in that** the method is carried out during the operation of the gas turbine (1).

17. Method according to claim 13, 13 or 15,
**characterized in that**, for the more rapid cooling of the rotor (3), the method is carried out, after operation, during a cooling phase.

## Revendications

1. Système (42) de refroidissement d'une turbine ( 1) à gaz,
comprenant un canal annulaire d'un compresseur (5) qui s'étend axialement le long d'un rotor (3) et dans lequel sont prévues au moins une couronne (15) d'aubes (14, 28, 33 ) directrices de compresseur fixées de manière solidaire en rotation et au moins une couronne (17) d'aubes (16) mobiles fixées sur un disque (19) du rotor (3), les aubes (14, 28, 33) directrices du compresseur ayant respectivement une emplanture (32) d'aube qui peut être fixée et sur laquelle est formé un profil (30) d'aube et à la suite une tête (26) d'aube,
comprenant au moins un point (34) de prélèvement d'air de refroidissement disposé sur le rotor (3) pour découpler un courant d'air de refroidissement dans un système de canal de refroidissement disposé dans le rotor (3) et
comprenant une unité (8) de turbine dans laquelle, lorsque la turbine (1) gaz fonctionne, des éléments sollicités thermiquement par du gaz (20) chaud peuvent être refroidis par le courant d'air de refroidissement qui peut être découplé ainsi qu'un conduit (46) d'apport d'un liquide (45) au courant d'air de refroidissement, qui a au moins une ouverture (48, 49) de sortie du liquide,
**caractérisé en ce que** le conduit (46) d'apport avec un canal (44) partiel s'étend dans au moins l'une des aubes (28, 33) directrices du compresseur de la couronne (15) et l'ouverture (48, 49) est disposée pour que le liquide (45) sorte dans la partie en amont du point (34) de prélèvement d'air de refroidissement.

2. Système (42) de refroidissement suivant la revendication 1,
**caractérisé en ce que**
le rotor (3) a au moins deux disques (19', 19") immédiatement voisins entre lesquels est prévu un espace (24 ) intermédiaire de disque, qui est ouvert radialement vers l'extérieur et dans lequel les têtes (26) des aubes (28) directrices du compresseur de la couronne (15) pénètrent.

3. Système (42) de refroidissement suivant la revendication 1 ou 2,
**caractérisé en ce que**
plusieurs aubes (28, 33) directrices du compresseur réparties symétriquement sur la périphérie de la couronne ont un canal (44) partiel du conduit (46) d'apport et des ouvertures (48) de sortie du liquide (45).

4. Système (42) de refroidissement suivant l'une des revendications 1 à 3,
**caractérisé en ce que**
les têtes (26) des aubes (28) directrices du compresseur de la couronne (15) sont fixées sur un anneau ( 54) de fixation qui a pour le liquide (45) au moins un canal (56) de passage ayant l'ouverture (49) de sortie du liquide dans l'espace (24) intermédiaire des disques.

5. Système (42) de refroidissement suivant la revendication 4,
**caractérisé en ce que**
l'anneau (54) de fixation a un certain nombre de passages (56) répartis symétriquement sur le pourtour et d'ouvertures (49) de sortie du liquide (45).

6. Système (42) de refroidissement suivant l'une ou plusieurs des revendications 2 à 5,
**caractérisé en ce que**
chaque ouverture (48) débouchant dans l'espace (24) intermédiaire de disque est opposée au point (34) de prélèvement d'air de refroidissement.

7. Système (42) de refroidissement suivant l'une ou plusieurs des revendications 2 à 6,
**caractérisé en ce que**
chaque ouverture (48, 49) débouchant dans l'espace ( 24) intermédiaire de disque est en forme de buse.

8. Système (42) de refroidissement suivant l'une ou plusieurs des revendications 1 à 7,
**caractérisé en ce que** l'ouverture (48, 49) est conformée de manière à ce que le liquide ait une composante d'écoulement qui est dirigée dans la direction périphérique du rotor (3) et qui est identique à une composante dans la direction de rotation du rotor (3).

9. Système (42) de refroidissement suivant l'une ou plusieurs des revendications 1 à 8,
**caractérisé en ce que**
le conduit (46) d'apport du liquide (45) comprend un organe de réglage, par lequel la quantité de liquide (45) apporté par unité de temps peut être réglée.

10. Système (42) de refroidissement suivant la revendication 9,
**caractérisé en ce que**
la quantité de liquide (25) apporté peut être adaptée par un régulateur (52) agissant sur l'organe de réglage.

11. Système (42) de refroidissement suivant la revendication 1,
**caractérisé en ce que**
l'aube (28, 33) directrice de compresseur est dégagée du côté de la tête.

12. Système (42) de refroidissement suivant l'une des revendications précédentes,
**caractérisé en ce que**
dans l'aube (28, 33) de compresseur, le canal (44) partiel pour le passage du liquide (45) est une cavité, un tuyau ou un trou.

13. Procédé de refroidissement d'une turbine (1) à gaz,
dans lequel on injecte un courant d'air de refroidissement découplé en un point (34) de prélèvement d'air de refroidissement d'un compresseur (5) dans un système de canal d'air de refroidissement disposé dans le rotor (3),
dans lequel on apporte un liquide (45) au courant d'air de refroidissement,
**caractérisé en ce que**
l'on injecte le liquide (45) dans le courant d'air de refroidissement en amont du point (34) de prélèvement de l'air de refroidissement.

14. Procédé suivant la revendication 13,
**caractérisé en ce que**
l'on insuffle le liquide (45) avec une composante d'écoulement dirigée dans la direction périphérique du rotor ( 3).

15. Procédé suivant la revendication 13 ou 14,
**caractérisé en ce que**
le liquide (45) est de l'eau, notamment de l'eau distillée.

16. Procédé suivant la revendication 13, 14 ou 15,
**caractérisé en ce que**
l'on effectue le procédé pendant que la turbine (1) à gaz fonctionne.

17. Procédé suivant la revendication 13, 14 ou 15,
**caractérisé en ce que**
pour refroidir le rotor plus rapidement, on effectue le procédé à la suite du fonctionnement pendant une phase de refroidissement.
